# EUROPEAN PATENT SPECIFICATION

(11) **EP 2 106 878 B1**
(45) Date of publication and mention of the grant of the patent: **28.04.2010**
(21) Application number: 09100141.2
(22) Date of filing: 23.02.2009
(51) Int. Cl.: B23Q 1/28, B23Q 16/10

(54) **Rotary table having clamp state confirmation means**
Drehtisch mit Klemmzustandsbestätigungsmitteln
Table rotative ayant des supports de confirmation d'état de la pince

(30) Priority: 04.04.2008 JP 2008098569
(43) Date of publication of application: 07.10.2009
(73) Proprietor: Fanuc Ltd, Yamanashi 401-0597 (JP)
(72) Inventor: Okita, Tadashi, Minamitsuru-gun Yamanashi 401-0597 (JP); Watanabe, Norio, Minamitsuru-gun Yamanashi 401-0597 (JP); Fujimoto, Akihiko, Minamitsuru-gun Yamanashi 401-0597 (JP); Kojima, Kunio, Minamitsuru-gun Yamanashi 401-0597 (JP); Ikai, Satoshi, Minamitsuru-gun Yamanashi 401-0597 (JP); Kawamura, Hiroyuki, Minamitsuru-gun Yamanashi 401-0597 (JP)
(74) Representative: Thum, Bernhard

(56) References cited:
- JP-A- 2004 082 287
- JP-A- 2007 125 640

## Description

### BACKGROUND OF THE INVENTION

### 1. Field of the Invention

The present invention relates to a rotary table comprising a clamping mechanism for holding, in a stop position, a rotary table driven by a direct drive motor, and more particularly to a rotary table having a function for confirming that a clamping operation of the clamping mechanism is completed.

### 2. Description of the Related Art

In recent years, rotary tables comprising a so-called direct drive structure, in which a drive motor is directly connected to a rotating shaft, have become widely used in machine tools (for example, machining centers and the like).

Employing this direct drive system makes it possible to operate the rotary table at a wide range of rotational speeds, and also makes it possible to achieve agile rotating shaft response performance relative to disturbance-induced load variations. Thus, direct drive system machine tools can enhance the productivity and processing precision of a workpiece.

Well-known technologies for a rotary table employing a direct drive system will be explained hereinbelow.
(1) Japanese Patent Application Laid-open No. 2007-125640, forming the base of the preamble of claim 1, discloses a rotary table indexing device for a motor direct-drive machine tool. In this device, in addition to a clamping device for holding the rotary table in the stop position, a holding device that generates a holding force for holding this rotary table when power is shut off is added in addition to the above-mentioned clamping device. Then, when power to the machine tool and rotary table indexing device is cut off due to a power outage or the like, this holding device operates to reliably hold the rotary table in this stop position.
(2) In Japanese Examined Utility Model Application Nos. H8-10504 and H8-10505, there is disclosed a direct drive-type rotary indexing table that rotates and positions an indexing table at a prescribed angle via a direct drive system that does not utilize a reduction mechanism. Significantly increasing the clamping force when this indexing table is being positioned enables the table to be held firmly even when subjected to a large load.
(3) Japanese Examined Utility Model Application No. H6-21639 discloses a direct drive-type rotary indexing device that rotates and positions an indexing table at a prescribed angle via a direct drive system that does not utilize a reduction gear. This device is designed such that unnecessary load is not added to the bearings of the output shaft, and, in addition, the indexing table does not move in the axial direction when clamping the indexing table at positioning time.

In a machine tool rotary table, it is common to carry out a clamping operation subsequent to performing an indexing operation, and to confirm the clamp state prior to the cutting load acting on the rotary table. To improve productivity, it is preferable that the time required for confirming the clamp state be shortened as much as possible. Further, to curb machine tool equipment costs, the index table itself must be inexpensive, and therefore it is preferable that the rotary table have a simple structure.

In general, when using a clamping device to hold the rotating shaft after the rotating shaft has been indexed, a cylinder mechanism is utilized to hold the rotating shaft by pressing a disc brake against a fixed part. As means for confirming that this clamping has been completed, there is a technique that uses a proximity switch to detect the movement of the cylinder piston, and a technique that uses a pressure sensor to detect an increase in pressure inside the cylinder.

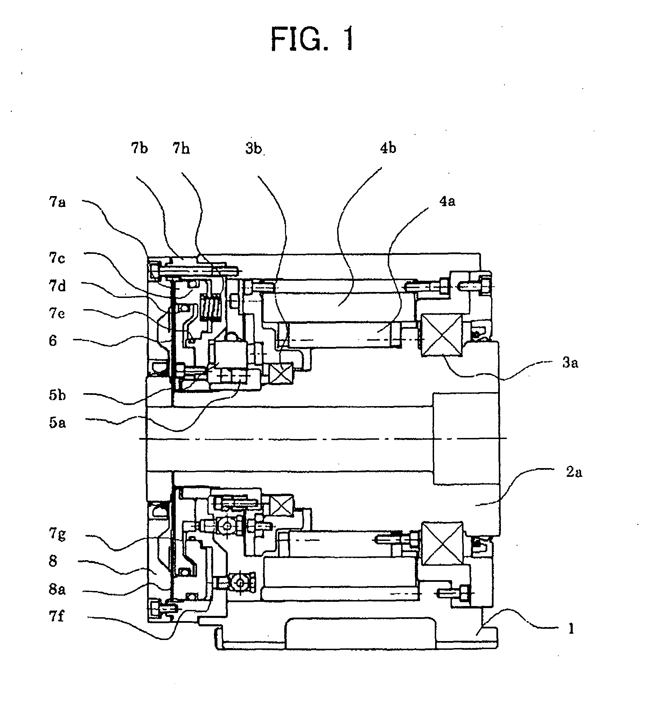

In a direct drive structure rotary table of the prior art, clamp state confirmation is possible by using a pressure sensor to detect the increase in pressure on the inside of a forward-thrust air chamber 7f for thrusting the piston 7a forward (See Fig. 1).

Techniques for confirming the clamp state by detecting an increase in pressure such as those described above require the incorporation of a proximity switch or pressure sensor into the rotary table. Incorporating a switch or sensor into the rotary table requires the formation of a space or air hole for mounting the switch or sensor, and, in addition, also requires wiring or piping for collecting a signal from the sensor, making the structure complex and raising costs.

Further, in the prior art described above, clamping force is not applied at the instant the pressure rises, so that clamp state completion can only be confirmed after the passage of a fixed wait-time subsequent to the increase in pressure. For this reason, a long time is needed to confirm the clamp state.

### SUMMARY OF THE INVENTION

Accordingly, an object of the present invention is to provide a rotary table which makes it possible to confirm the state of a clamping operation and shorten the time required for clamp state confirmation without the addition and use of a dedicated detector for confirming the state of a clamping operation.

A rotary table according to the present invention is driven by a direct drive motor constituted from a stator housed and fixed inside a case, a rotor rotatably disposed relative to the stator, and a motor output shaft, integrally attached to the rotor and having a rotary table fixed at one end thereof and a position detector for detecting a rotational position at the other end thereof, and the rotary table comprises a clamping mechanism which is fixed to the output shaft of the direct drive motor and which holds the rotary table in a stop position. The rotary table comprises clamp state confirmation means for confirming that the clamping mechanism is clamping the rotary table. The clamp state confirmation means includes oscillation instruction means for applying either a torque variation or a speed variation to the direct drive motor and generating an oscillating movement that repeatedly rotates the motor output shaft in a positive rotation direction and a reverse rotation direction; position deviation information computation means for computing position deviation information based on position information outputted from the position detector; and determination means for determining a hold state of the rotary table by the clamping mechanism based on position deviation information outputted from the position deviation information computation means.

The oscillation instruction means can also apply to the direct drive motor either a torque variation or a speed variation which changes a frequency over time.

The clamp state confirmation means further comprises computation means for computing the position deviation information outputted from the position deviation information computation means for each frequency band; and storage means for storing the position deviation information computed by the computation means, and the oscillation instruction means can also set a frequency that induces oscillation movement in the output shaft of the direct drive motor based on the position deviation information stored in the storage means.

The rotary table according to the present invention comprises the above-described constitution, and uses positional feedback information of the motor control system to carry out a clamp state confirmation operation, thereby eliminating the need to provide a new sensor or the like for confirming the clamp state. As a result, the constitution of the direct drive-type rotary table can be simplified, costs can be lowered, and the time required for a confirmation operation can be shortened, thus contributing to enhanced productivity.

### BRIEF DESCRIPTION OF THE DRAWINGS

The above-mentioned and other objects and features of the present invention should become clear from the following embodiments, which will be explained by referring to the attached drawings. These drawing include:
Fig. 1 is a cross-sectional view showing the basic structure of a rotary table possessing a direct drive structure;
Fig. 2 is a functional block diagram of the essential parts of a rotary table having clamp state confirmation means of the present invention (embodiment in association with torque variation);
Fig. 3 is a flowchart showing an algorithm for executing a clamp state confirmation, in accordance with the present invention;
Fig. 4 is an example of a processing program comprising a clamp instruction;
Fig. 5 is a time chart of a clamp state confirmation operation according to the present invention (in case where the hold state has been confirmed for an initial clamp state confirmation);
Fig. 6 is a time chart for a clamp state confirmation operation according to the present invention (in case where the release state has been confirmed for an initial clamp state confirmation);
Fig. 7 is a diagram showing an example of the rotating shaft position and position deviation waveform when a braking mechanism executes a clamping operation in a state in which an oscillation instruction has been inputted to the direct drive motor; and
Fig. 8 is a simplified functional block diagram of a rotary table having clamp state confirmation means of the present invention (embodiment in association with speed variation).

### DETAILED DESCRIPTION OF THE PREFERRED EMBODIMENTS

First, the principle behind a clamp state confirmation operation according to the present invention will be explained.

A rotary table with a direct drive structure is not only able to rotate at high speed, but can also respond quickly to movement instructions directed at the rotating shaft. Further, since this type of rotary table comprises a position detector that is connected directly to the rotating shaft, the rotary table possesses the ability to detect disturbances and load variations with a high degree of sensitivity.

Accordingly, in the present invention, in a rotary table structure that integrally provides a rotating shaft, a motor for driving the rotating shaft, and a position detector (sensor gear), a servo controller applies a torque variation to the drive motor without changing the position instructed by a numerical controller, inducing micro oscillations in the rotating shaft (vibrations in accordance with minute rotations in the positive and negative rotation directions) when confirming the clamp state of the rotating shaft.

In a state in which the rotating shaft is not clamped (a state in which the brake is not acting on the rotating shaft), the rotating shaft actually oscillates slightly in accordance with the applied torque variation even though position commands from the numerical controller-instructed position does not vary. As a result, a fluctuation occurs in position deviation obtained based on the position information fed back from the position detector integrated with the rotating shaft.

In a state in which the rotating shaft is clamped (in other words, in a state in which the clamping torque is functioning and the brake is acting on the rotating shaft), on the other hand, either a fluctuation in the position deviation does not occur or the range of fluctuation in the position deviation is extremely small due to the movement of the rotating shaft being restricted.

Based on the above discovery, the present invention uses a difference in the fluctuation of the position deviation, which is detected from the difference between a state in which the brake is acting on the rotating shaft and state in which the brake is not acting on the rotation shaft, to determine the completion of a clamping operation.

Next, a rotary table having a direct drive structure will be explained. Furthermore, the example of a direct drive structure explained here is that of a publicly known technology.

Fig. 1 is a cross-sectional view showing the basic structure of a rotary table having a direct drive structure.

The shaft 2a of the rotary table (not shown in the drawing) is inside a case 1, and is supported in a freely rotating condition by way of a main bearing 3a and a support bearing 3b. A motor stator 4b, brake cylinder 7b, sensor head 5b and lid 8 are fixed to the case 1. By contrast, a motor rotor 4a, position detector (sensor gear) 5a and disk 6 are all fixed to the shaft 2a so as to be able to integrally rotate with the rotary table.

A piston 7a is installed inside the cylinder 7b by way of sealing members 7c through 7e to enable forward and backward strokes, and is biased by a plurality of coil springs 7h in the direction in which the piston 7a moves toward the clamping side. Further, a forward air chamber 7f and a backward air chamber 7g are respectively disposed between the piston 7a and the cylinder 7b so as to enable the piston 7a to move in accordance with compressed air.

In the clamp release state, compressed air is supplied to the backward air chamber 7g by an electromagnetic valve (not shown in the drawing), and a state in which the piston 7a has moved to the backward end against the compressive force of the coil spring 7h is maintained. In the clamp state, on the other hand, the compressed air is discharged from the backward air chamber 7g by the electromagnetic valve and compressed air is supplied to the forward air chamber 7f, thereby causing the piston 7a to move forward, sandwiching the disk 6 between this piston 7a and the friction surface 8a of the lid 8.

A rotary table having the above-described direct drive system does not use a dedicated device to confirm the clamp state of the rotating shaft, but rather generates a torque variation-induced micro oscillation in the rotating shaft of the servo motor that drives the rotary table (that is, repeatedly applies slight rotations to the servo motor rotating shaft in the positive and negative rotation directions), and determines whether or not the rotating shaft is in the clamp state based on the amplitude of the oscillations of the rotary table rotating shaft at this time.

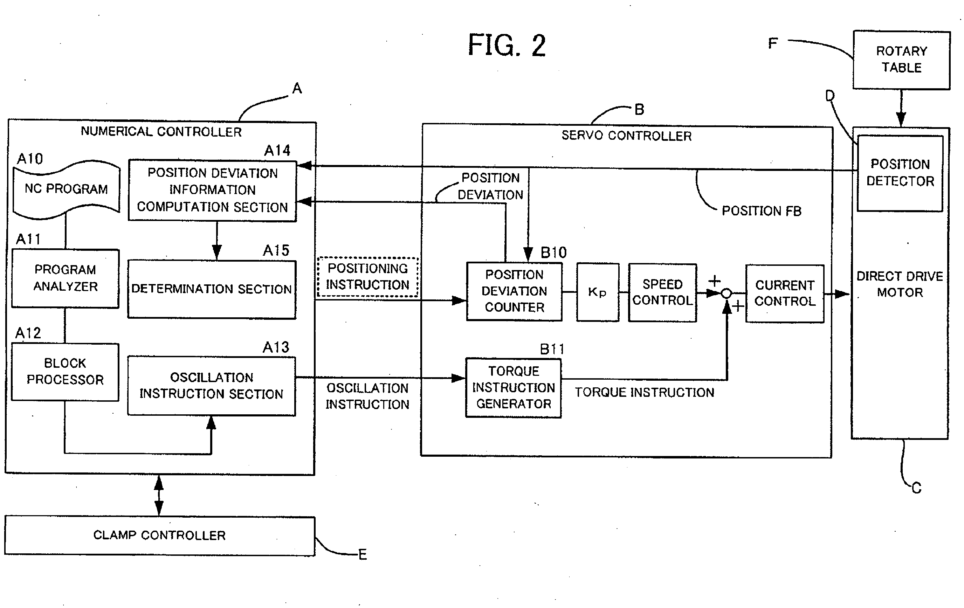

Fig. 2 is a functional block diagram of the feature of a rotary table F having clamp state confirmation means of the present invention. The operation for confirming the clamp state in accordance with the present invention will be explained in more detail using Fig. 2.

A numerical controller A comprises a microprocessor (CPU) capable of highspeed processing. The numerical controller A analyzes a NC program A10 in a program analyzer A11, and the NC program, which has been analyzed in the program analyzer A11, is processed in a block processor A12 that carries out processing one block at a times. When there is a clamp instruction in a block processed by the block processor A12, the numerical controller A sends this clamp instruction to a clamp controller E. The clamp controller E controls piston driving means (omitted from the drawing) such that the piston 7a (see Fig. 1) carries out a clamping operation.

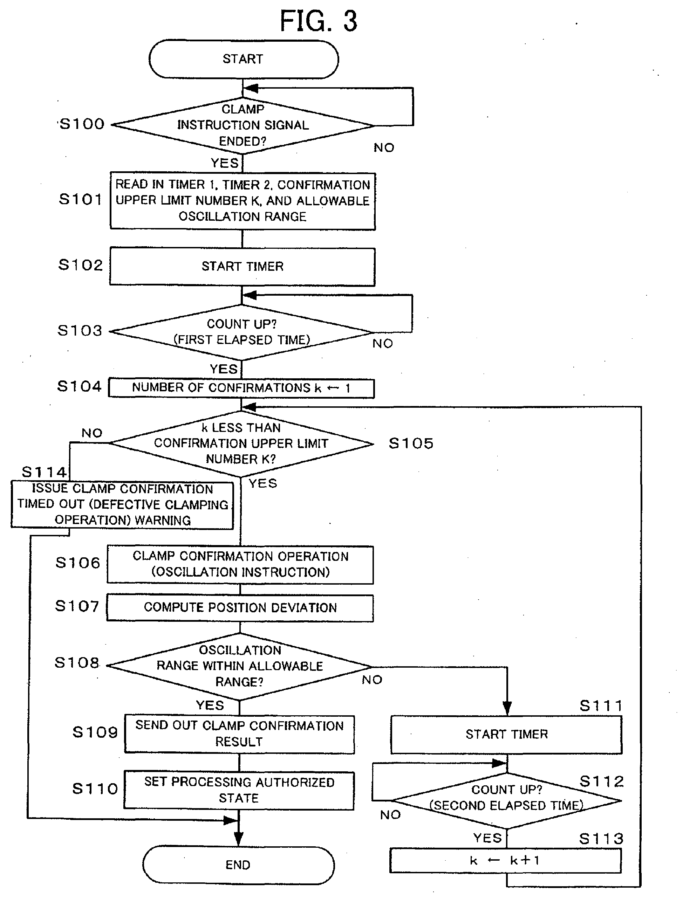

Meanwhile, an oscillation instruction section A13 commences an operation to confirm the clamp state based on the clamp instruction from the block processor A12. Specifically, the oscillation instruction section A13 commences execution of a clamp state confirmation program stored in the memory (omitted from the drawing) of the numerical controller A. This program algorithm is explained later referring to Fig. 3.

The oscillation instruction section A13 sends out an oscillation instruction to a torque instruction generator B11 of a servo controller B to oscillate the rotary table F. This oscillation instruction is for a micro oscillation that will not affect the indexing of the rotary table. The torque instruction generator B11 of the servo controller B generates a torque instruction that induces oscillation movement in the rotating shaft of the direct drive motor C, based on the oscillation instruction. There is no positioning instruction from the numerical controller A to the servo controller B at this time.

In this way, the control of the direct drive motor when confirming the clamp state is performed using torque control. Then, driving the direct drive motor like this causes micro oscillations (back-and-forth vibrations) in the rotating shaft of the direct drive motor C.

As described above, if the direct drive motor C is driven when the clamping mechanism, which is constituted from the piston 7a and so forth, is not clamping the rotating shaft 2a (in other words, in a state in which the brake is not acting on the rotating shaft 2a), the rotating shaft is moved slightly (oscillated) in accordance with a torque instruction from the numerical controller A despite the fact that the position instructed from the numerical controller A has not varied. As a result, a fluctuation occurs in the position deviation obtained on the basis of position information (feedback information) detected by the position detector D.

When the rotating shaft 2a is clamped (in other words, when the brake and clamping torque are acting on the rotating shaft 2a), on the other hand, the movement of the rotating shaft 2a is restricted such that either a fluctuation in the position deviation does not occur, or the range of fluctuation in the position deviation is extremely small. Here, the position deviation is computed using a position feedback FB position fed back from the position detector D. This position deviation, for example, can be computed by using either a signal from a position deviation counter B10 of the servo controller B representing the position deviation to the numerical controller A, or a position detection signal outputted from the position detector D. These will be referred to generically hereinbelow as "position deviation."

Then, a determination is made as to whether or not the clamping mechanism constituted from the piston 7a and so forth is in the clamping operation state by determining in the determination section A15 whether or not the position deviation computed by the position deviation information computation section A14 falls within an allowable range. By comparing the range of fluctuation (amplitude) of this position deviation against a pre-established threshold (allowable value), it is possible to determine if the rotating shaft 2a clamping operation has been completed, or if the clamping operation is incomplete.

Furthermore, Fig. 2 shows the parts related to the present invention, and omits descriptions of the speed loop, current loop and other such parts that exist for normal motor control.

The processing algorithm for confirming the clamp state of the rotating shaft, which the rotary table of the present invention executes in accordance with the above-described clamp state confirmation principle, will be explained in accordance with the flowchart shown in Fig. 3.

As was explained by referring to Fig. 2, the processing program for confirming the clamp state starts when the oscillation instruction section A13 receives a clamp instruction signal from the block processor A12. Then, once the end of the clamp instruction signal has been confirmed (Step S100), a "first elapsed time", "second elapsed time", upper limit for number of confirmations K, and allowable oscillation range, which are stored beforehand in the storage device (omitted from the drawing) of the numerical controller A, are read in (Step S101).

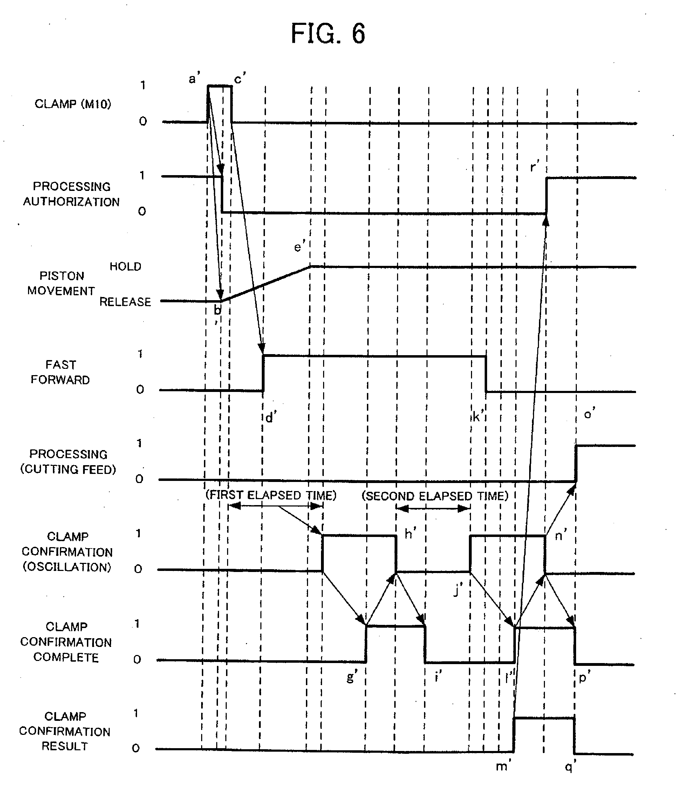

The first elapsed time and second elapsed time will be explained here. The first elapsed time is the time from the point at which the end of the clamp instruction signal was confirmed until the start of the clamp state confirmation, and is set at an arbitrary value that is longer than the movement time of the piston 7a (Refer to Fig. 1) for carrying out clamping. The piston 7a movement time is decided beforehand. Referring to Fig. 6, which will be explained further below, will make it easier to understand the relationship between the length of the first elapsed time and the piston 7a movement time. Further, the second elapsed time is the waiting time (from the point at which the previous clamp state confirmation ended) until the start of the second and subsequent clamp state confirmations. The second elapsed time can be the same length as the first elapsed time, or a different length. The upper limit for number of confirmations K represents the upper limit for the number of times that the clamp state is to be confirmed.

The timer is started (Step S102), and when the "first elapsed time" to which the timer clock has been preset has finished clocking (Step S103), the number of clamp state confirmations k is set to the initial value of 1 (Step S104).

Then, a determination is made as to whether or not the number of clamp state confirmations k (initially, this is k = 1 in the processing of Step S104) is less than the upper limit for number of confirmations K (Step S105). When the number of clamp state confirmations k exceeds the upper limit for number of confirmations K, a warning to the effect that clamp confirmation has timed out (bad clamping operation) is issued (Step S114) since the clamp state cannot be confirmed normally, and this process ends. When the number of clamp state confirmations k is less than the upper limit for number of confirmations K, on the other hand, a clamp confirmation operation is carried out by inducing oscillation movement in the rotating shaft of the direct drive motor C (Step S106).

A clamp confirmation operation is carried out in Step S106 (that is, an oscillation instruction is applied to the direct drive motor C), the position deviation that occurs at this time is computed by the position deviation information computation section A14 of the numerical controller A (Step S107), and a determination is made as to whether or not the range of fluctuation (the range of oscillation) of this computed position deviation falls within the preset allowable range (Step S108). When the range of fluctuation of the position deviation falls within the allowable range, the result of the clamp state confirmation is output to a display section (omitted from the drawing) (Step S109), a message to the effect that the rotating shaft is being held in the clamped state is displayed, the interlock on the cutting feed shaft (not shown in the drawing) is released to create a processing-authorized state (Step S110), and this process ends.

When it is determined in Step S108 that the range of fluctuation of the position deviation does not fall within the allowable range, on the other hand, it is still not possible to confirm that clamping is being carried out normally at this time (that is, at the k^{th} clamp state confirmation operation), and the timer is started (Step S111) to commence yet another (k + 1^{th} and subsequent) clamp state confirmation operation. When this timer finishes clocking the above-mentioned preset "second elapsed time" (Step S112), 1 is added to the number of clamp state confirmations k (Step S113), processing returns to Step S105, and the next clamp state confirmation operation is implemented in the same way as the previous one.

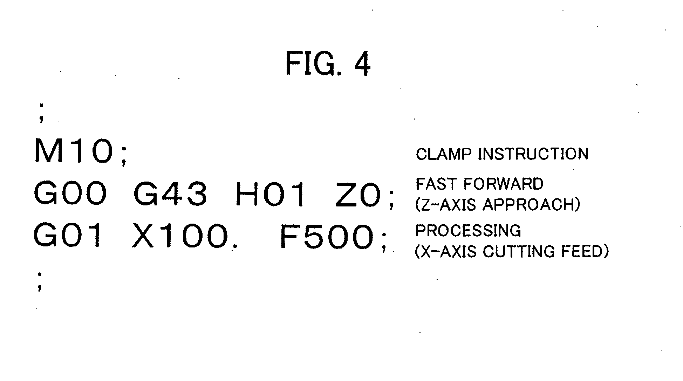

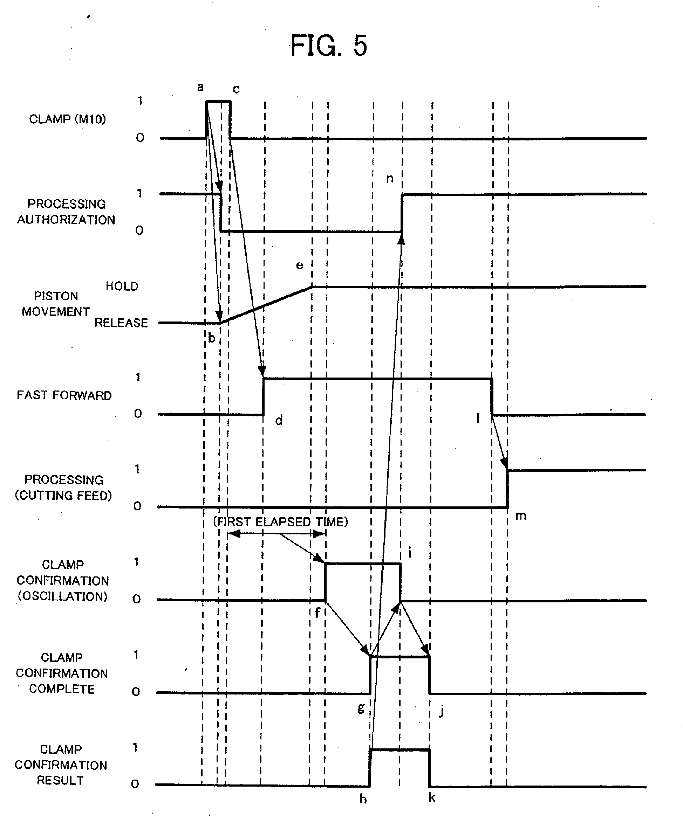

Next, an example of a processing program comprising the clamp instruction shown in Fig. 4 will be given to explain a clamp state confirmation operation in accordance with the present invention using the timing charts of Figs. 5 and 6. In the processing program shown in Fig. 4, "M10" is the clamp instruction block, "G00 G43 H01 Z0" is the fast-forward (Z-axis approach) instruction block, and "G01 X100. F500" is the processing (X-axis cutting feed) instruction block.

First, a case in which the first clamp state confirmation operation confirms that the rotating shaft is in the clamped state (that is, the rotary table is being held stationary) will be explained using Fig. 5.

A clamp instruction (M10) is sent out from the numerical controller A to the clamp controller E (a), and the piston 7a constituting the braking mechanism commences movement (b). This clamp instruction (M10) ends immediately after being sent out (c), and the numerical controller A operates the next block, commencing the fast-forward axial movement G00 for the Z-axis approach in the program of Fig. 4 (d).

The timer starts at the point in time (c) at which the clamp instruction (M10) ends, and clocks the "first elapsed time" thereafter. The clamp confirmation operation is executed subsequent to clock termination, then the result of the determination in Step S108 of the flowchart of Fig. 3 becomes YES, and the fact that the rotating shaft clamp state was confirmed is reported to the servo controller B (f). As described above, the "first elapsed time" here is set based on the premeasured movement time of the piston 7a constituting the braking mechanism.

While the clamp state confirmation operation is being executed by the numerical controller A, that is, when the timer is clocking the time until the "first elapsed time" is reached, the oscillation operation of the direct drive motor C is controlled by the servo controller B. The numerical controller A makes a determination as to whether or not the clamping mechanism has the rotating shaft 2a in a clamped state in accordance with the oscillation operation of this direct drive motor C rotating shaft. In this example, since the determination is that the rotating shaft is in the clamped state, a clamp state confirmation end signal (g) and a clamp state confirmation result signal are sent out (h). When the clamp state confirmation result signal is sent out, the rotary table gets into the processing authorized state (n). Since the rotary table is already in the processing authorized state, the X-axis cutting feed G01 of the next block is executed once the axial movement of the control shaft for moving the tools has ended.

Next, a case in which the first clamp state confirmation operation confirms that the rotating shaft is not in the clamped state (that is, the hold on the rotary table has been released) will be explained using Fig. 6.

After completion of the first clamp state confirmation operation (h'), execution of the clamp state confirmation operation is commenced once again when the timer finishes clocking the second elapsed time (j'). When it is possible to confirm via this second clamp state confirmation operation that the rotary table is in a hold state (m'), the rotary table is deemed to be in the processing authorized state (r'), and the next block, X-axis cutting feed, is executed. When it is not possible to confirm via the second clamp state confirmation operation that the rotary table is in the hold state, on the other hand, the next clamp state confirmation operation or the clamp state confirmation operation subsequent thereto is repeated a separately set number of times. When it is not possible to confirm that the rotary table is in the hold state even after repeating the clamp state confirmation operation a prescribed number of times, an alarm to the effect that the operation has timed out (bad clamping operation) is issued, and this process ends.

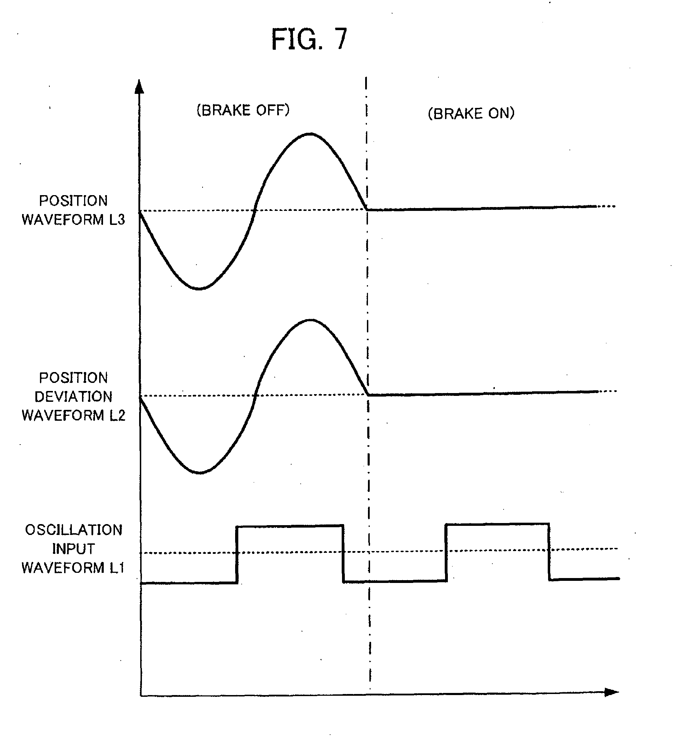

Fig. 7 is a diagram showing examples of the position waveform L3 and the position deviation waveform L2 when the braking mechanism executes a clamping operation by causing oscillations of an input waveform L1 to occur in the rotating shaft of the direct drive motor to confirm the clamp state of the rotating shaft.

The oscillations resulting from the input waveform L1 generate the sine wave-shaped oscillations shown in the position waveform L3 of Fig. 7. In the example shown in Fig. 7, a position waveform L3 with a vibration frequency of 50Hz and an amplitude of ±0.004 degrees is obtained.

Since the positioning instruction from the numerical controller A does not change during this oscillation period, the position waveform L3 and the waveform L2 of the position deviation (the difference between the positioning instruction and the position waveform L3) become the same. When the range of fluctuation of this position deviation waveform L2 is greater than the allowable set threshold during the clamp state confirmation operation, the servo control device outputs a clamp state confirmation result stating that the hold on the rotary table has been released.

When the braking mechanism is functioning and the rotating shaft is in a fixed state, that is, the oscillations of the waveform L3 of Fig. 7 substantially stop as shown in the right half of waveform L3, on the other hand, the fluctuation of the position deviation waveform L2 also disappears as a result of this. In a state in which the range of fluctuation of this position deviation is less than the set threshold, the servo control device outputs a clamp state confirmation result stating that the rotary table is in a hold state.

### (First Embodiment)

As can be understood from the waveforms shown in Fig. 7, by inducing oscillations in the rotating shaft of the direct drive motor C during the time it takes to obtain at least a half-cycle worth of data on the fluctuations in the position deviation, it is possible to determine the clamp state, that is, to output the clamp state confirmation result immediately thereafter. In a first embodiment of the present invention, the rotating shaft clamp state by the clamping mechanism is confirmed by inducing oscillations like this in the rotating shaft of the direct drive motor C.

According to this embodiment, in this example, which applies an oscillation of 50Hz as shown in Fig. 7, it is possible to confirm whether or not the clamping mechanism is operating normally in roughly 0.02 seconds, which is the sum of 0.01 seconds, obtained by the calculation of one second/50Hz/2(a half cycle), and a software determination time.

Furthermore, the first embodiment is advantageous in that executing the clamp state confirmation operation subsequent to a clamp instruction at the point in time at which a clamping operation by the braking mechanism has ended during the axial movement for the approach to the processing point, makes it possible to end this clamp state confirmation operation substantially without using up the required time.

### (Second Embodiment)

The above-mentioned first embodiment is used when sufficient position deviation amplitude has been obtained to determine the clamp state by the applied torque variation. However, there are instances when position deviation of sufficient amplitude is not obtained due to how a workpiece loaded onto this rotary table is installed.

The processing jig and workpiece (these jig and workpiece are hereinafter collectively called as "workpiece") arranged on the rotary table are not limited to specific shapes and sizes, and workpiece of various shapes that fall within the ranges of drivable inertia and mass are placed on the rotary table.

Generally speaking, problems do not occur when the inertia of the workpiece is sufficiently small and the torsional rigidity thereof is sufficiently high. However, when the workpiece inertia is large and the torsional rigidity is low, the resonance frequency and anti-resonance frequency of the entire rotating shaft are lowered, and further, when the vibration frequency that causes the oscillation (the frequency of the applied vibration) and the anti-resonance frequency of the rotating shaft that comprises the workpiece either coincide or approximate one another, a situation occurs in which the position detector is unable to capture sufficient position deviation amplitude.

To avoid the occurrence of a situation like this, this embodiment is constituted so as to change the oscillation-inducing vibration frequency during clamp state confirmation to obtain sufficient amplitude captured by the position detector within the time period of the clamp state confirmation. For example, vibration frequency of 20Hz is applied immediately following the start of clamp state confirmation, and after 0.5 seconds this vibration frequency is changed to 80Hz. If the primary anti-resonance frequency of the rotating shaft is 25Hz when the brake is not acting on the rotating shaft, it becomes possible to detect the release state as the clamp state confirmation result because there is frequency between 25Hz and 80Hz that enables a position deviation of sufficient amplitude to be obtained.

The shortcoming of this embodiment is that time is required to change the frequency every time there is a clamp state confirmation operation, but this embodiment is effective when the axial movement for approach subsequent to an index operation takes a long time, making it possible for the operation to end within this time period.

### (Third Embodiment)

In this embodiment, the same as in the above-mentioned second embodiment, a clamp state confirmation operation is carried out by measuring the response characteristics for the vibration frequency of the rotating shaft comprising the workpiece in a state in which the brake is not acting on the rotating shaft (in a clamp release state), and inducing oscillation movement in the rotating shaft of the direct drive motor C using a frequency that does not diminish the amplitude of the position deviation.

As an example, a measurement operation is commenced separate from the clamp state confirmation operation in a state in which the brake is not acting on the rotating shaft. A 20Hz torque variation is applied when measurement commences, and after 2 seconds, the frequency is changed to 80Hz. For example, oscillation occurs at frequencies, which are the medians of respective frequency bands that divide the frequencies from 20Hz through 80Hz into 12 equal parts, the amplitudes of the position deviations detected at this time are stored temporarily inside the motor controller, and the frequency at which the largest position deviation amplitude is obtained is selected. The selected frequency is automatically set in a parameter as the vibration frequency, a torque variation is subsequently applied to the direct drive motor C at the set frequency during the clamp state confirmation operation, and the result thereof is used in determining the clamp state.

According to this embodiment, it is possible to make a determination by applying the appropriate frequency oscillation for the minimum period of time during a clamp state confirmation operation.

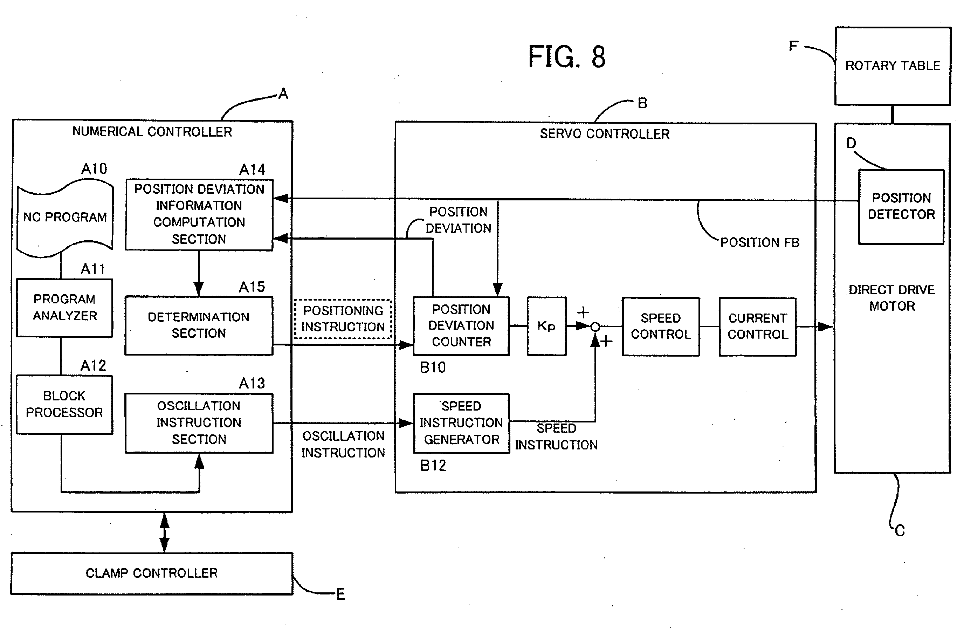

Fig. 8 is a functional block diagram of the feature of a rotary table F having clamp state confirmation means of the present invention. The rotary table shown in Fig. 2 uses a torque variation to induce oscillation in the rotating shaft of the direct drive motor C, but the rotary shaft shown in this Fig. 8 induces oscillation in the rotating shaft of the direct drive motor C in accordance with a speed variation.

As explained hereinabove, in accordance with the present invention, it becomes possible to carry out a clamp state confirmation operation using a direct drive motor and a position detector without utilizing a special detection device, enabling the clamp state of the rotary table to be reliably confirmed while at the same time lowering costs.

Further, the present invention relating to a clamp state confirmation operation can be used to determine a malfunction in a rotary table brake, and can also be used to determine a malfunction in a gravity axis brake comprising a motor, position detector and braking mechanism on the same axis, and is therefore also useful as machine tool maintenance management means.

Furthermore, as mentioned above, an object of the present invention is to provide a rotary table that makes it possible to confirm the state of a clamping operation and to shorten the time required for clamp state confirmation without the addition and use of a dedicated detection device to confirm the state of a clamping operation, but the present invention can also be added to and used with a conventional rotary table that uses a pressure sensor to carry out clamp state confirmation.

## Claims

1. A rotary table (F), which is driven by a direct drive motor (C) constituted from a stator (4b) housed and fixed inside a case (1), a rotor (4a) rotatably disposed relative to the stator (4b), and a motor output shaft (2a) integrally attached to the rotor (4a) and having a rotary table (F) fixed at one end thereof and a position detector (5a, D) for detecting a rotational position at the other end thereof, and which comprises a clamping mechanism (6, 7a-h, 8, 8a) that is fixed to the output shaft (2a) of the direct drive motor (C) and holds the rotary table (F) in a stop position, wherein the rotary table (F) comprises clamp state confirmation means (A12) for confirming that the clamping mechanism (6, 7a-h, 8, 8a) is clamping the rotary table (F), **characterized in that**:
the clamp state confirmation means (A) includes:
oscillation instruction means (A13) for applying either a torque variation or a speed variation to the direct drive motor (C) and inducing an oscillation movement that repeatedly rotates the motor output shaft (2a) in a positive rotation direction and a reverse rotation direction;
position deviation information computation means (A14) for computing position deviation information based on position information outputted from the position detector (5a, D); and
determination means (A15) for determining a hold state of the rotary table (F) by the clamping mechanism (6, 7a-h, 8, 8a) based on position deviation information outputted from the position deviation information computation means (A14).

2. The rotary table according to Claim 1, wherein the oscillation instruction means (A13) applies to the direct drive motor (C) either a torque variation or a speed variation that changes a frequency over time.

3. The rotary table according to Claim 2, wherein the clamp state confirmation means (A) further comprises computation means (A) for computing position deviation information outputted from the position deviation information computation means (A14) for each frequency band; and
storage means for storing the position deviation information computed by the computation means (A); and
the oscillation instruction means (A13) sets a frequency that induces oscillation movement in the output shaft (2a) of the direct drive motor (C) based on the position deviation information stored in the storage means.

## Patentansprüche

1. Drehtisch (F), der von einem direkten Antriebsmotor (C) angetrieben wird, wobei der Antriebsmotor einen Stator (4b) aufweist, der in einem Gehäuse (1) angeordnet und befestigt ist, einen relativ zu dem Stator (4b) drehbar angeordneten Rotor (4a) und eine Motorausgangswelle (2a), die integral an dem Rotor (4a) angeordnet ist und an einem ihrer Enden einen Drehtisch und an ihrem jeweils anderen Ende einen Positionsdetektor (5a, D) zum Erfassen einer Rotationsposition aufweist, wobei der Drehtisch (F) einen Klemmmechanismus (6, 7a-h, 8, 8a) aufweist, der an der Ausgangswelle (2a) des Direktantriebsmotors (C) befestigt ist und den Drehtisch (F) in einer Halteposition hält, wobei der Drehtisch (F) ein Klemmzustandsbestätigungsmittel (A12) aufweist, zum Bestätigen, dass der Klemmmechanismus (6, 7a-h, 8, 8a) den Drehtisch (F) klemmt,
**dadurch gekennzeichnet, dass** das Klemmzustandsbestätigungsmittel (A13) ferner aufweist:
Oszillierungsanweisungsmittel (A13), das den Direktantriebsmotor (C) entweder mit einer Drehmomentveränderung oder mit einer Geschwindigkeitsveränderung anweist, wobei das Oszillierungsanweisungsmittel eine Oszillationsbewegung erzeugt, die wiederholt die Motorausgangswelle (2a) in eine positive Rotationsrichtung oder eine umgekehrte Rotationsrichtung dreht;
Positionsabweichungsinformations-Berechnungsmittel (A14) zum Berechnen einer Positionsabweichungsinformation basierend auf der von dem Positionsdetektor (5a, D) ausgegebenen Positionsinformation; und
Bestimmungsmittel zum Bestimmen eines Haltezustands des Drehtischs (F) durch das Klemmmittel (6, 7a-h, 8, 8a) basierend auf der von dem Positionsabweichungsinformations-Berechnungsmittel (A14) ausgegebenen Positionsabweichungsinformation.

2. Drehtisch nach Anspruch 1, wobei das Oszillierungsanweisungsmittel (A13) entweder eine Drehmomentveränderung oder eine Geschwindigkeitsveränderung vorgibt, die die Frequenz über die Zeit verändert.

3. Drehtisch nach Anspruch 2, wobei das
Klemmzustandbestätigungsmittel (A) weiter aufweist:
ein Berechnungsmittel (A) zum Berechnen einer Positionsabweichungsinformation, die von dem Positionsabweichungsinformations-Berechnungsmittel (A14) für jedes Frequenzband ausgegeben wird; und
Speichermittel zum Speichern der von dem Berechnungsmittel (A) berechneten Positionsabweichungsinformation; und dass
das Oszillierungsanweisungsmittel (A13) eine Frequenz wählt, die eine Oszillationsbewegung der Ausgangswelle (2a) des Direktantriebsmotors (C) basierend auf der in dem Speichermittel gespeicherten Positionsabweichungsinformation erzeugt.

## Revendications

1. Table rotative (F) qui est entraînée par un moteur à entraînement direct (C) constitué d'un stator (4b) reçu et fixé à l'intérieur d'un boîtier (1), d'un rotor (4a) disposé de façon rotative par rapport au stator (4b) et d'un arbre de sortie de moteur (2a) attaché de façon intégrale au rotor (4a) et ayant une table rotative (F) fixée à une extrémité de celui-ci et un détecteur de position (5a, D) pour détecter une position en rotation à l'autre extrémité de celui-ci, et qui comprend un mécanisme d'immobilisation par pince (6, 7a-h, 8, 8a) qui est fixé à l'arbre de sortie (2a) du moteur à entraînement direct (C) et maintient la table rotative (F) dans une position d'arrêt, dans laquelle la table rotative (F) comprend un moyen de confirmation d'état de pince (A12) pour confirmer que le mécanisme d'immobilisation par pince (6, 7a-h, 8, 8a) pince la table rotative (F), **caractérisée en ce que :**
le moyen de confirmation d'état de pince (A) inclut :
un moyen d'instruction d'oscillation (A13) pour appliquer soit une variation de couple, soit une variation de vitesse au moteur à entraînement direct (C) et induire un mouvement d'oscillation qui fait tourner de façon répétée l'arbre de sortie de moteur (2a) dans un sens de rotation positif et un sens de rotation inverse ;
un moyen de calcul d'information d'écart de position (A14) pour calculer une information d'écart de position sur la base d'une information de position délivrée en sortie du détecteur de position (5a, D) ; et
un moyen de détermination (A15) pour déterminer un état de maintien de la table rotative (F) par le mécanisme d'immobilisation par pince (6, 7a-h, 8, 8a) sur la base d'une information d'écart de position délivrée en sortie du moyen de calcul d'information d'écart de position (A14).

2. Table rotative selon la revendication 1, dans laquelle le moyen d'instruction d'oscillation (A13) applique au moteur à entraînement direct (C) soit une variation de couple, soit une variation de vitesse qui change une fréquence avec le temps.

3. Table rotative selon la revendication 2, dans laquelle le moyen de confirmation d'état de pince (A) comprend en outre un moyen de calcul (A) pour calculer une information d'écart de position délivrée en sortie du moyen de calcul d'information d'écart de position (A14) pour chaque bande de fréquences ; et
un moyen de mémorisation pour mémoriser l'information d'écart de position calculée par le moyen de calcul (A) ; et
le moyen d'instruction d'oscillation (A13) fixe une fréquence qui induit un mouvement d'oscillation dans l'arbre de sortie (2a) du moteur à entraînement direct (C) sur la base de l'information d'écart de position mémorisée dans le moyen de mémorisation.
